# EUROPEAN PATENT SPECIFICATION

(11) **EP 1 304 312 B1**
(45) Date of publication and mention of the grant of the patent: **15.07.2015**
(21) Application number: 01932268.4
(22) Date of filing: 25.05.2001
(51) Int. Cl.: C02F 1/467, C02F 1/461, C02F 1/34, C02F 101/18, C02F 101/20, C02F 101/22, C02F 103/16

(54) **METHOD AND DEVICE FOR CONTINUOUS ELECTROLYTIC DISPOSAL OF WASTE WATER**
VERFAHREN UND VORRICHTUNG ZUR KONTINUIERLICHEN ELEKTROLYTISCHEN ABWASSERENTSORGUNG
PROCEDE ET DISPOSITIF DESTINES A L'ELIMINATION ELECTROLYTIQUE EN CONTINU D'EAUX USEES

(30) Priority: 25.05.2000 JP 2000155514
(43) Date of publication of application: 23.04.2003
(73) Proprietor: Japan Techno Co., Ltd, Ota-ku, Tokyo 146-0085 (JP)
(72) Inventor: OMASA, Ryushin, Fujisawa-shi, Kanagawa 251-0033 (JP)
(74) Representative: Gervasi, Gemma
(86) International application number: PCT/JP2001/004401
(87) International publication number: WO 2001/090003

(56) References cited:
- JP-A- 8 281 272
- US-A- 5 730 856

## Description

### FIELD OF THE INVENTION

The present invention relates to method and apparatus for electrolyzing waste liquid continuously, and particularly to method and apparatus for continuously electrolyzing waste liquid containing metals at high speed.

### BACKGROUND ART

Chromic acid exists in the form of anions such as CrO₄²⁻ or Cr₂O₇²⁻ in plating solution used in a chrome plating treatment. At this time, chrome is hexavalent and has an auburn-based color. When chrome becomes trivalent, it has a cyan-based color. In a treatment process for chrome acid contained in chrome plating waste liquid, the waste liquid is acidified (pH3.5 or less) by using sulfuric acid (chrome acid becomes bichromate ions in acidic solution of chrome acid), then hexavalent chromium in the waste liquid is reduced to trivalent chromium by using reducing agent, and then the waste liquid is neutralized into pH7 to 8 in a neutralizing tank by pouring alkali into the waste liquid. Here, trivalent reduced chromium is precipitated as chromium hydroxide, the precipitants are removed as sludge, and then only clear supernatant liquid is discharged. The reduction potential of chromic acid is set to 250mV (ORP meter) or less.

In order to conduct the reducing reaction efficiently, it is necessary to keep pH at 3 or less, and further as the reducing agent is used sodium bisulfite (NaHSO₃), sodium thiosulfate (NaS₂O₂, sodium hyposulfite), sulfur dioxide (SO₂), ferrous sulfate (FeSO₄), sodium sulfite (Na₂SO₃, sulfite of soda), sodium metabisulfite (Na₂S₂O₂,) or the like. Comparing the priorities among these reducing agents, ferrous sulfate is preferable from the viewpoint of cost. However, when ferrous sulfate is used, it has a disadvantage that the amount of ferrous sulfate to be consumed is needed to be large, so that the amount of sludge occurring is increased. Further, when ferrous sulfate is used, ferrous ions are oxidized by chromium into auburn ferric ions. Therefore, the pollution caused by the ferric ions must be removed in order to enhance the water quality of the waste liquid. When sulfur dioxide is used as reducing agent, the reducing efficiency is high, however, pH and reducing conditions are severe. Therefore, if these conditions are deviated from predetermined ranges, it acts as acid rather than reducing agent and thus the reducing reaction does not progress. When the reducing reaction does not progress, excessive additives are discharged in the form of sulfur dioxide into the atmosphere, which causes air pollution. When sodium sulfite is used as reducing agent, it is preferable from the viewpoint that the solubility of sodium sulfite is high and the amount of sludge generated is relatively small However, sodium bisulfite is generally broadly used from the viewpoint of the sludge generation amount, the price, the treatment, etc. With respect to the reduction of chromium, the reaction velocity is dependent on the pH value, and thus the reaction is carried out under the pH condition of 3.5 or less. If pH is larger than this value, the reaction velocity is lowered.

For reference, the amount of reducing agent required to treat chromic anhydride of 1kg is shown in the following Table 1, and the amount of sludge generated due to addition of neutralizing agent in the treatment of chromic anhydride of 1kg is shown in the following Table 2.

**[Table 1]**

| REDUCING AGENT | AMOUNT FOR TREATMENT OF CHROMIC ANHYDRIDE OF 1 KG |
|---|---|
| Sodium bisulfite | 1.6 kg to 3 kg |
| Sodium thiosulfate | 7 kg |
| Sulfur dioxide | 1.0 kg to 1.8 kg |
| Ferrous sulfate | 8 kg to 16 kg |
| Sodium sulfite | 1.9 kg |

**[Table 2]**

| REDUCING AGENT | NEUTRALIZING AGENT | SLUDGE AMOUNT |
|---|---|---|
| Sodium bisulfite | Quick lime | 4.0 kg |
| Sodium bisulfite | Caustic soda | 1.1 kg |
| Ferrous sulfate | Quick lime | 12.0 kg |
| Ferrous sulfate | Caustic soda | 4.2 kg |

Little study has been hitherto made on the method of electrolytically treating waste liquid of chromic acid, and the number of practical examples is small. In addition, the conventional electrolyzing method is not proper to the treatment of dense solution, and it would be possible to apply this method to electrolytic reduction of solution only when the electrolytic reduction is carried out only in a batch process and also the solution is limited to rare solution such as washing water or the like. However, in the conventional electrolytic method, the distance between electrodes is set to 80mm or more because there is a risk that explosion occurs if the distance between electrodes is small. Therefore, the time required for the treatment is long (three to five hours), and the continuous treatment is substantially impossible.

As an example of the treatment condition of the conventional electrolytic method, the electrolytic reaction is carried out under the condition of pH2 or less and the current density of 0.5 to 2A/dm³. However, the conventional electrolytic method has various problems under the actual practical operation, for example, breakdown of electrodes, increase of consumption power, unsuitableness to dense waste liquid, etc. Therefore, it is difficult to use this method under the present circumstances (see the section "ELECTROLYTIC REDUCTION TREATMENT' in the chromic acid treatment of "PLATING TECHNIQUE MANUAL").

In addition, the method of electrolytically treating chromic acid waste liquid by using chemicals has been broadly recognized as being environmentally very harmful at all times. Various treatment methods and alternative methods to solve these problems have been studied, however, there has not yet been discovered any low-cost treatment method in which not only the use amount of chemicals such as reducing agent described above, etc. can be reduced, but also no chromium is discharged. The following is the present problems occurring in the method of electrolytically treating waste liquid of chromic acid by using chemicals:
(1) high running cost;
(2) occurrence of abnormal odor based on sulfide contained in reducing agent and its harmfulness;
(3) abnormal odor emitted from a treatment tank and its harmfulness;
(4) adverse effect of residual reducing agent on subsequent chemical treatment process (aggregation effect and precipitation effect are reduced); and
(5) outflow of hexavalent chromium caused by reduction in throughput capacity.

Further, the applicant of this application previously proposed a method and an apparatus for treating metal-contained waste liquid by electrolytic oxidation in Japanese Patent No. 2767771. However, in the technique disclosed in this publication, the reducing or oxidizing step itself based on electrolysis is carried out in the batch process. That is, with respect to the conventional electrolytic waste liquid treatment method, it has been estimated that it is impossible to continuously carrying out the reducing or oxidizing process itself because the practically sufficient treatment velocity cannot be achieved.

Further, it is general that plating factory waste liquid contains not only heavy metal, but also sodium cyanide or potassium cyanide. These cyanides exist in the waste liquid while forming complex salts with heavy metals. The complex salts are very stable, and thus they cannot be removed by normal treatments. In addition, the density of cyanogen in plating waste liquid is equal to about 50,000 to 60,000ppm, and under such a high density, cyanogen cannot be removed by normal chemical treatments.

A method of conducting the electrolytic treatment in combination with oxidizing agent is proposed as a method of withdrawing metals from waste liquid containing metals and cyanogen and also decomposing cyanogen (see JP(A)-9-225470). However, this method has various problems. For example, this method produces ammonia in the electrolytic reaction, and adversely affects the surrounding environment. Further, even when this method is applied to a case where the density of cyanogen is relatively low (for example, 1000ppm or less), the treatment needs several hours or more and thus the treatment time is long.

An object of the present invention is to provide a method and an apparatus which needs neither reducing agent nor oxidizing agent as chemicals, and reduces metal ions in waste liquid by hydrogen occurring from one electrode to precipitate the metals while decomposing cyanogen into carbon dioxide and nitrogen by oxygen occurring form the other electrode so that the metal components and/or cyanogen components can be removed highly efficiently and continuously in short time.

### SUMMARY OF THE INVENTION

According to the present invention, in order to attain the above object, there is provided a method for continuously electrolyzing waste liquid, comprising the steps of:
continuously supplying waste liquid to be treated into a first electrolytic tank of a series of tanks comprising a plurality number n (n represents an integer equal to or greater than 2) of electrolytic tanks each having an anode and a cathode, the electrolytic tanks being connected in series; and
continuously taking out treated waste liquid from an n-th electrolytic tank of the series of tanks,
wherein a voltage is applied between the anode and the cathode in each tank to electrolyze the waste liquid to be treated under the state that vibrating vanes fixed to vibrating rods which are operationally connected to vibration generating means so as to vibrate in the waste liquid to be treated are vibrated at an amplitude of 0.05 to 10.0mm and at an oscillation frequency of 100 to 1500 cycles per minute to induce vibrating flow in the waste liquid to be treated.

In an aspect of the present invention, the vibrating flow is generated so that the three-dimensional flow velocity of the waste liquid to be treated is equal to 150mm/second or more. In an aspect of the present invention, the vibration generating means is vibrated at a frequency of 10 to 500Hz.

In an aspect of the present invention, the distance between the anode and the cathode is kept to be equal to 5 to 50mm. In an aspect of the present invention, a voltage of 4 to 15V is applied between the anode and the cathode.

According to the present invention, in order to attain the above object, there is also provided an apparatus for continuously electrolyzing waste liquid, comprising:
a series of tanks comprising a plurality number n (n represents an integer equal to or greater than 2) of electrolytic tanks each having an anode and a cathode, the electrolytic tanks being connected in series;
vibrating flow generating means which is equipped to each of the electrolytic tanks and generates vibrating flow in waste liquid to be treated; and
a power supply circuit for applying a voltage between the anode and the cathode,
wherein the vibrating flow generating means comprises vibration generating means; vibration transmitting rods which are operationally connected to the vibration generating means so as to vibrate in the waste liquid to be treated; and vibrating vanes fixed to the vibration transmitting rods.

In an aspect of the present invention, the distance between the anode and the cathode is set to 5 to 50mm.

In an aspect of the present invention, vibrating stress dispersing means is interposed between the vibration generating means and the vibration transmitting rods and/or between said vibration transmitting rods and the vibration vanes.

In an aspect of the present invention, the vibration generating means is used commonly by plural vibrating flow generating means.

In an aspect of the present invention, plural electrolytic tanks constituting the series of tanks are unified, and the electrolytic tanks thus unified are partitioned by respective partition walls. In an aspect of the present invention, a chute is equipped between the respective continuous electrolytic tanks thus unified so that the waste liquid to be treated is fed from one electrolytic tank to the other electrolytic tank. In an aspect of the present invention, the chute is equipped with a flow-in cut-out portion into which the waste liquid to be treated flows from the one electrolytic tank of the continuous electrolytic tanks of the unified electrolytic tanks, and a flow-out cut-out portion from which the waste liquid to be treated flows out to the other electrolytic tank of the continuous electrolytic tanks of the unified electrolytic tanks. In an aspect of the present invention, the one electrolytic tank of the continuous electrolytic tanks of the unified electrolytic tanks is equipped with a dam adjacently to the flow-in cut-out portion.

### BRIEF DESCRIPTION OF THE DRAWINGS

Fig. 1 is a plan view showing the construction of a continuously electrolyzing apparatus in which a waste liquid continuously electrolyzing method of the present invention is performed;
Fig. 2 is a cross-sectional view showing the continuously electrolyzing apparatus of Fig. 1;
Fig. 3 is a cross-sectional view showing the continuously electrolyzing apparatus of Fig. 1;
Fig. 4 is a partially-omitted plan view showing the continuously electrolyzing apparatus of Fig. 1;
Fig. 5 is a partially-omitted cross-sectional view showing the continuously electrolyzing apparatus of Fig. 1;
Fig. 6 is a partially-omitted perspective view showing the neighborhood of a flow-in cut-out portion of the continuously electrolyzing apparatus of Fig. 1;
Fig. 7 is an enlarged cross-sectional view of a fixing portion of a vibration transmitting rod to a vibration member of the continuously electrolyzing apparatus of Fig. 1;
Fig. 8 is an enlarged cross-sectional view showing a modification of the fixing portion of the vibration transmitting rod to the vibration member;
Fig. 9 is an enlarged cross-sectional view showing the fixing portion of a vibration vane to the vibration transmitting rod of the continuously electrolyzing apparatus of Fig. 1;
Fig. 10 is a plan view showing a modification of the vibration vane and the fixing member;
Fig. 11 is a plan view showing a modification of the vibration vane and the fixing member;
Fig. 12 is a plan view showing a modification of the vibration vane and the fixing member;
Fig. 13 is a plan view showing a modification of the vibration vane and the fixing member;
Fig. 14 is a graph showing the relationship between the length and flexibility of the vibration vane;
Fig. 15 is a cross-sectional view showing a modification of the vibrating flow generator;
Fig. 16 is a cross-sectional view showing a modification of the vibrating flow generator;
Fig. 17 is a cross-sectional view showing a modification of the vibrating flow generator;
Fig. 18 is a cross-sectional view showing a modification of the vibrating flow generator;
Fig. 19 is a cross-sectional view showing a modification of the vibrating flow generator;
Fig. 20 is a cross-sectional view showing a fixing manner of the vibrating flow generator to the electrolytic tank in a continuously electrolyzing apparatus in which the waste liquid continuously electrolyzing method of the present invention is carried out;
Fig. 21 is a cross-sectional view showing the continuously electrolyzing apparatus of Fig. 20;
Fig. 22 is a plan view showing the continuously electrolyzing apparatus of Fig. 20;
Figs. 23A to 23C are plan views of a laminate member;
Figs. 24A and 24B are cross-sectional views showing the sealing state of the electrolytic tank by the laminate member;
Figs. 25A to 25E are cross-sectional views showing various embodiments of the laminate member;
Fig. 26 is a partially-omitted plan view showing the construction of a continuously electrolyzing apparatus in which the waste liquid continuously electrolyzing method of the present invention is carried out;
Fig. 27 is a cross-sectional view showing the continuously electrolyzing apparatus of Fig. 26; and
Fig. 28 is a cross-sectional view showing the continuously electrolyzing apparatus of Fig. 26.

### PREFERRED EMBODIMENTS FOR IMPLEMENTING THE INVENTION

Embodiments of the present invention will be described with reference to the accompanying drawings. In the drawings, the members and parts having the same functions are represented by the same reference numerals.

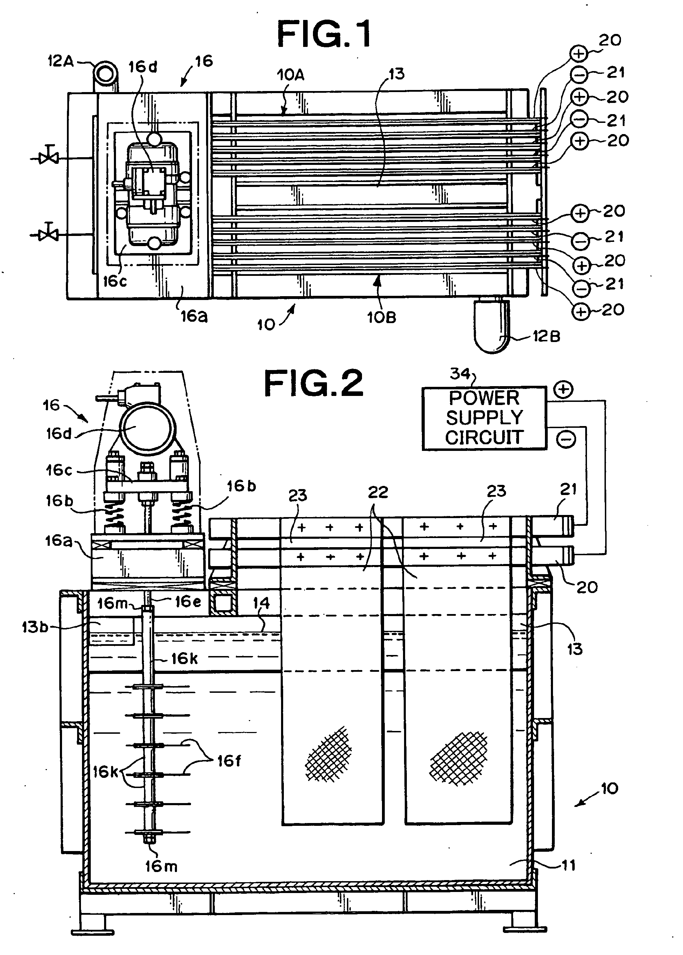

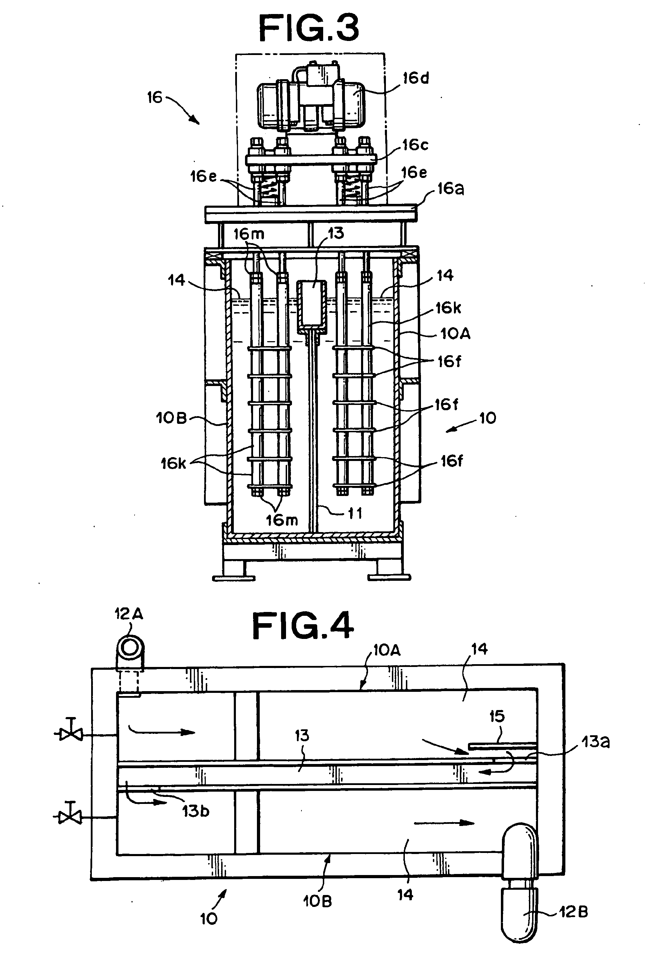

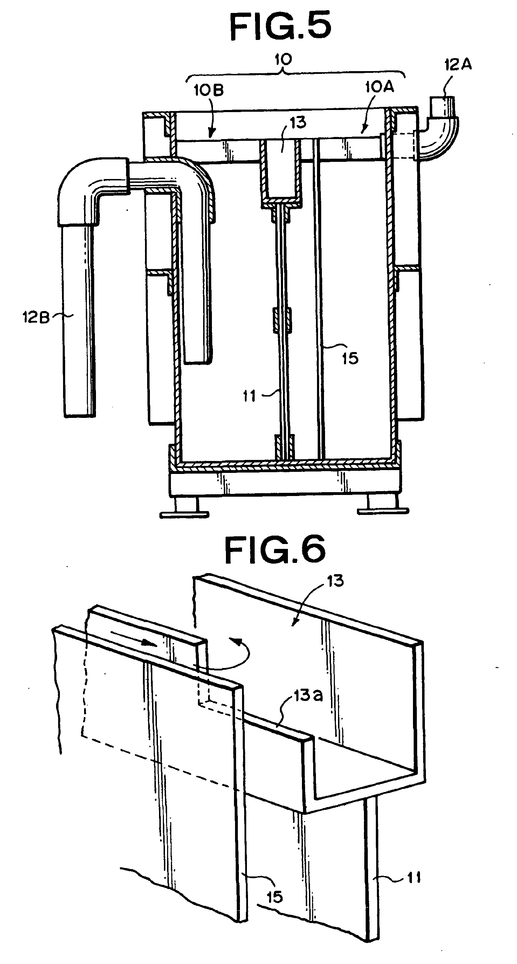

Figs. 1 to 5 show the construction of an embodiment of a continuously electrolyzing apparatus in which a method for continuously electrolyzing waste liquid of the present invention is carried out. Here, Fig. 1 is a plan view, Figs. 2 and 3 are cross-sectional views, Fig. 4 is a partially-omitted plan view and Fig. 5 is a partially-omitted cross-sectional view.

In these figures, two electrolytic cells or electrolytic tanks 10A and 10B are unified to constitute an array or series 10 of electrolytic tanks. The series 10 forms a tank as a whole, and the electrolytic tank 10A and the electrolytic tank 10B are partitioned by a partition wall 11. Waste liquid 14 to be treated is supplied into the electrolytic tanks 10A and 10B.

In the series 10, the electrolytic tanks 10A and 10B are connected to each other in series (the in-series connection means the link style with respect to the flow of waste liquid, and indicates that the waste liquid flows through plural electrolytic tanks in turn). That is, a waste liquid supply pipe 12A for supplying waste liquid to be treated from the external is connected to one electrolytic tank 10A, and a waste liquid take-out pipe 12B for taking out treated waste liquid to the external is connected to the other electrolytic tank 10B. Further, a chute 13 for feeding the waste liquid 14 in the electrolytic tank 10A to the electrolytic tank 10B is equipped along the upper end edge of the partition wall 11 between the electrolytic tanks 10A and 10B. In the chute 13, a flow-in cut-out portion 13a for allowing the waste liquid 14 to flow in from the electrolytic tank 10A is formed in the wall thereof at the electrolytic tank (10A) side at one end thereof in the longitudinal direction, and a flow-out cut-out portion 13b for allowing the waste liquid 14 to flow out to the electrolytic tank 10B is formed in the wall thereof at the electrolytic tank (10B) side at the other end thereof in the longitudinal direction.

Further, a dam 15 is disposed adjacently to the flow-in cut-out portion 13a in the electrolytic tank 10A. The dam 15 serves to prevent the waste liquid 14 in the electrolytic tank 10A from flowing into the chute 13 excessively or timely unevenly, and it is fixed to the wall and bottom of the electrolytic tank 10A.

Fig. 6 is a partially-omitted perspective view showing the neighborhood of the flow-in cut-out portion 13a. In order to assist the flow of the waste liquid 14 from the flow-in cut-out portion 13a to the flow-out cut-out portion 13b through the chute 13, the chute 13 is preferably designed to be gradually inclined downwardly from the flow-in cut-out portion (13a) side to the flow-out cut-out portion (13b) side. In Figs. 4 and 6, the flow direction of the waste liquid 14 is indicated by arrows.

Various kinds of FRP, passive stainless steel, chemical-resisting iron, enamel or the like may be used as the material of the electrolytic tanks 10A, 10B, the chute 13 and the dam 15.

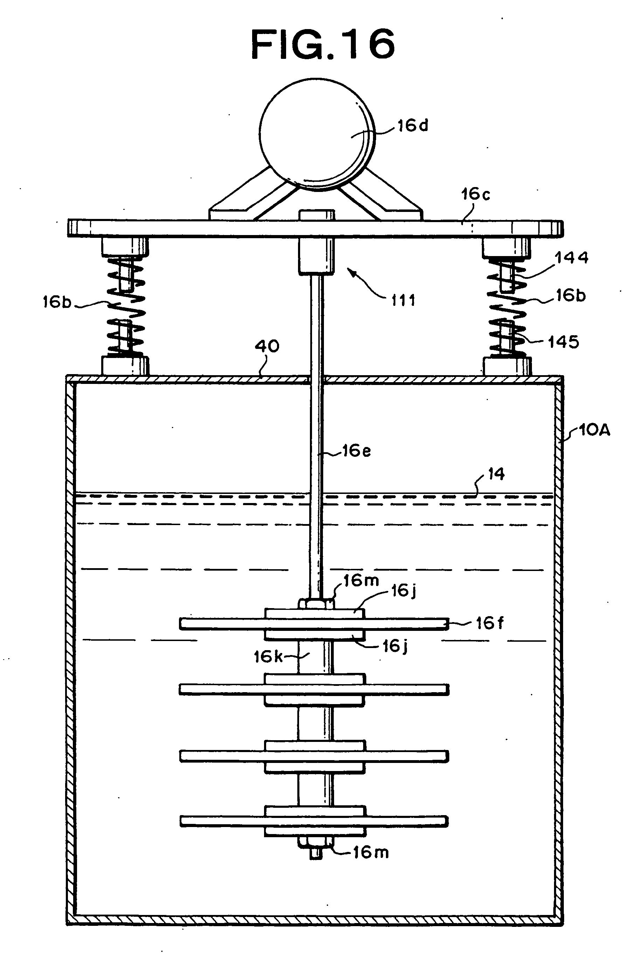

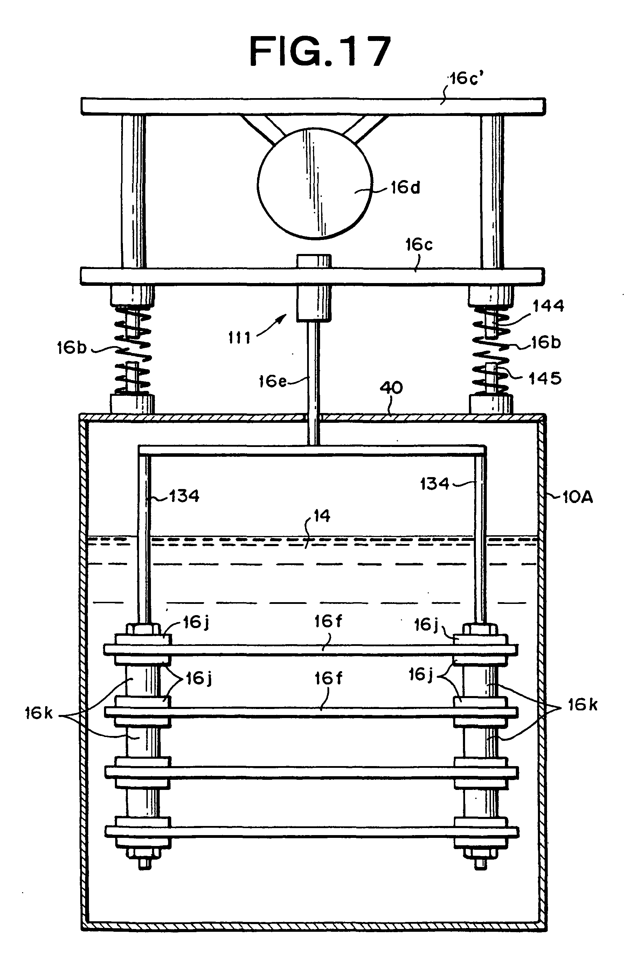

Reference numeral 16 represents a vibrating flow generator as vibrating flow generating means. The vibrating flow generator 16 has a base table 16a fixed to the electrolytic tanks 10A, 10B through a rubber vibration insulator, coil springs 16b as a vibration absorber fixed to the base table at the lower ends thereof a vibrating member 16c fixed to the upper end of the coil spring, a vibration motor 16d as vibration generating means fixed to the vibrating member, vibration transmitting rods 16e fixed to the vibrating member 16c at the upper ends thereof, and vibrating vanes 16f fixed to the lower half portions of the vibration transmitting rods so as to be immersed in the waste liquid 14. Rod-shaped upper and lower guide members may be disposed in each of the coil springs 16b to prevent side slipping of the springs as shown in Figs. 16 and 17. In place of the coil springs 16c, a buffer such as rubber or the like may be used.

The vibration motor 16d is vibrated at a frequency of 10 to 500Hz, particularly at a frequency of 10 to 150Hz, preferably at a frequency of 20 to 100Hz and more preferably at a frequency of 40 to 60Hz under the control based on an inverter or the like. The vibration generated by the vibration motor 16d is transmitted to the vibrating vanes 16f through the vibrating member 16c and the vibration transmitting rods 16e. The vibrating vanes 16f are vibrated at the tip edges thereof at a required frequency in the waste liquid 14. This vibration is generated so that the vibrating vanes 16f flutters from the fixing portions thereof to the vibration transmitting rods 16e to the tip edges thereof. The amplitude and frequency of the vibration of the vibrating vanes are different from those of the vibration motor 16d, and they are determined by the dynamic characteristic of vibration transmitting route and the interacting characteristic with the waste liquid 14. In the present invention, it is preferable that the amplitude is set to 0.05 to 10.0mm (for example, 0.1 to 10.0mm, particularly 2 to 8mm) and the vibration frequency is set to 100 to 1500 cycles per minute (for example, 100 to 1000 cycles per minute).

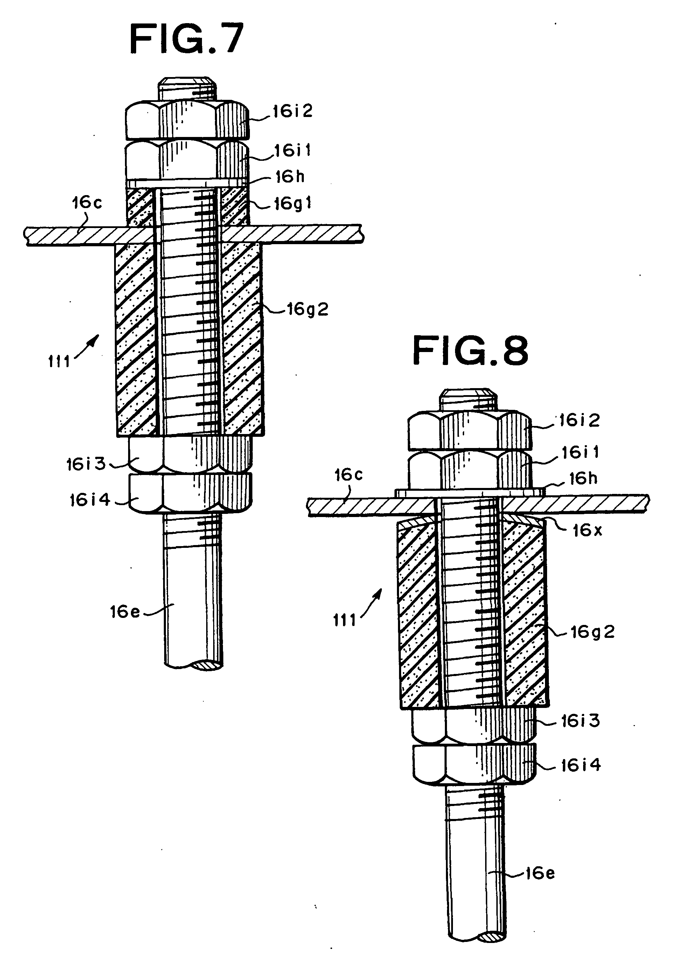

Fig. 7 is an enlarged cross-sectional view showing the fixing portion 111 of the vibration transmitting rod 16e to the vibrating member 16c.

As shown in Fig. 7, nuts 16i1, 16i2 are fitted to a male screw portion formed on the upper end of each vibration transmitting rod 16e through a vibrating stress dispersing member 16g1 and a washer 16h from the upper side of the vibrating member 16c, and nuts 16i3, 16i4 are fitted to the male screw portion through a vibrating stress dispersing member 16g2 from the lower side of the vibrating member 16c.

The vibrating stress dispersing members 16g1, 16g2 are used as the vibrating stress dispersing means, and it is formed of rubber, for example. The vibrating stress dispersing members 16g1, 16g2 may be formed of a hard elastic member of 80 to 120, preferably 90 to 100 in Shore A hardness, such as hard natural rubber, hard synthetic rubber, synthetic resin or the like. Particularly, hard urethane rubber of 90 to 100 in Shore A hardness is preferably used from the viewpoint of durability and chemical resistance. By using the vibrating stress dispersing means, the vibrating stress can be prevented from concentrating on the neighborhood of the joint portion between the vibrating member 16c and the vibration transmitting rod 16e, and the vibration transmitting rod 16e is hardly broken. Particularly, when the vibration frequency of the vibration motor 16d is set to 100Hz or more, the breakage preventing effect of the vibration transmitting rod 16e is remarkable.

Fig. 8 is an enlarged cross-sectional view showing a modification of the fixing portion 111 of the vibration transmitting rod 16e to the vibrating member 16c. This modification is different from the fixing portion of Fig. 7 only in that the vibrating stress dispersing member 16g1 is not disposed at the upper side of the vibrating member 16c and a spherical spacer 16x is interposed between the vibrating member 16c and the vibrating stress dispersing member 16g2, and the other parts are the same.

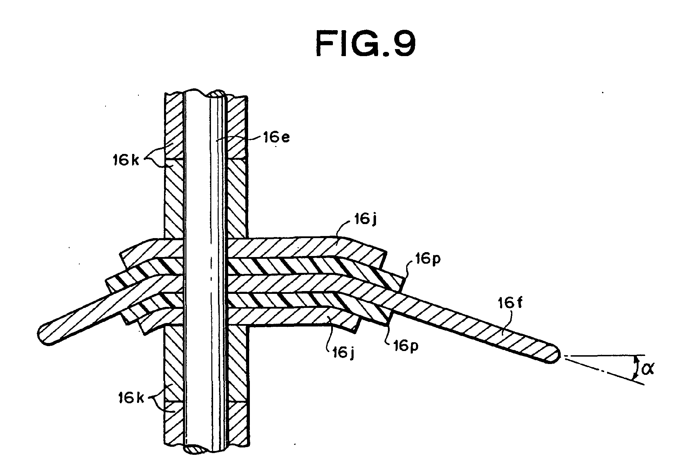

Fig. 9 is an enlarged cross-sectional view showing the fixing portion of each vibrating vane 16f to the vibration transmitting rod 16e. Vibrating vane fixing members 16j are disposed at both the upper and lower sides of each vibrating vane 16f. Spacer rings 16k for setting the interval between the neighboring vibrating vanes 16f are disposed through the fixing members 16j between the neighboring vibrating vanes 16f. As shown in Figs. 2 and 3, nuts 16m fitted to the male screws formed on each vibrating transmitting rods 16e are disposed at the upper side of the uppermost vibrating vane 16f and at the lower side of the lowermost vibrating vane 16f through the spacer rings 16k or through no spacer ring.

As shown in Fig. 9, an elastic member sheet 16p serving as the vibrating stress dispersing means formed of fluorine-based resin, fluorine-based rubber or the like is interposed between each vibrating vane 16f and each fixing member 16j to prevent breakage of the vibrating vane 16f. In order to further enhance the breakage preventing effect of the vibrating vane 16f, the elastic member sheet 16p is preferably disposed so as to slightly protrude from the fixing member 16j. As shown in Fig. 9, the lower surface (pressing face) of the upper fixing member 16j is designed in a convex shape and the upper surface (pressing face) of the lower fixing member 16j is designed in the corresponding concave shape. Accordingly, the portion of the vibrating vane 16f which are pressed from the upper and lower sides by the fixing members 16j is bent, and the tip portion of the vibrating vane 16f intersects to the horizontal plane at an angle of α. The angle α may be set to a value in the range from -30° to 30°, and preferably in the range from -20° to 20°. Particularly, the angle α is set to a value in the range from -30° to -5° or 5° to -30°, preferably in the range from 20° to 10° or 10° to 20°.

When the pressing face of the fixing member 16j is designed to be flat, the angle α is equal to 0°. It is unnecessary for all the vibrating vanes 16f to have the same angle α, and for example, the angle α of several lower vibrating vanes 16f is set to a minus value (that is, face down: oriented in the direction as shown in Fig. 9), and the angle α of the other vibrating vanes 16f is set to a plus value (that is, face up: oriented in the opposite direction to the direction shown in Fig. 9).

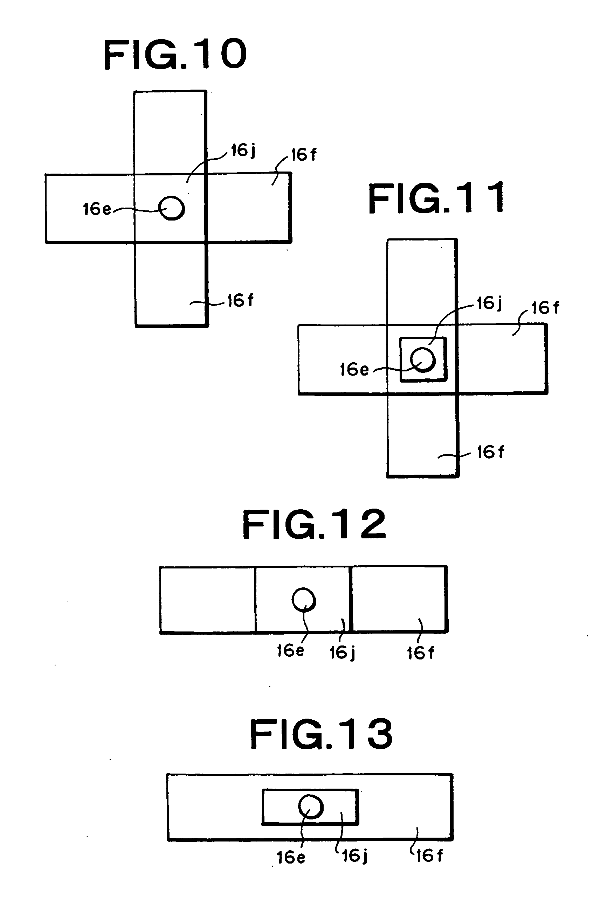

Figs. 10 to 13 are plan views showing modifications of the vibrating vane 16f and the fixing member 16j. In the modifications shown in Figs. 10 and 11, the vibrating vane 16f may be constructed by two strip members stacked orthogonally to each other, or may be constructed by cutting out one plate in a cross shape.

A metal plate, a synthetic resin plate or a rubber plate which are elastic may be used as the vibrating vane 16f. The preferable thickness range of the vibrating vane 16f is varied in accordance with the vibration condition, the viscosity of the waste liquid 14, etc., and it is set so that the tip portion of each vibrating vane 16f shows a "flutter phenomenon" (undulating state) with no breakage of the vibrating vane and the vibrating flow stirring efficiency is enhanced when the vibrating flow generator 16 is actuated. When the vibrating vane 16f is formed of metal plate such as stainless steel plate or the like, the thickness thereof may be set to 0.2 to 2mm. Further, when the vibrating vane 16f is formed of synthetic resin plate or rubber plate, the thickness thereof may be set to 0.5 to 10mm. A member achieved by integrally molding the vibrating vane 16f and the fixing member 16j may be used. In this case, there can be avoided such a problem that the waste liquid 14 infiltrates into the joint portion between the vibrating vane 16f and the fixing member 16j and solid materials are firmly fixed, so that cleaning takes a lot of trouble.

As the material of the metal vibrating vane 16f may be used titanium, aluminum, copper, steel, stainless steel, magnetic metal such as magnetic steel or the like, and alloys of these materials. As the material of the synthetic resin vibrating vane 16f may be used polycarbonate, vinyl-chloride resin, polypropylene, etc.

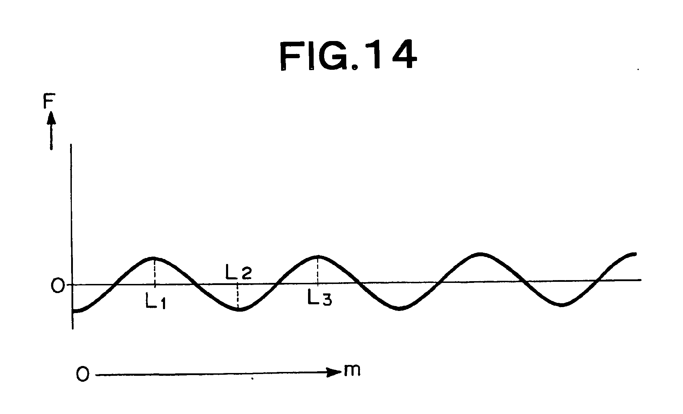

The degree of the "flutter phenomenon" of the vibrating vane which occurs due to the vibration of the vibrating vane 16f in the waste liquid 14 is varied in accordance with the vibration frequency of the vibration motor 16d, the length (the dimension from the tip edge of the fixing member 16j to the tip edge of the vibrating vane 16f) and thickness of the vibrating vane 16f, the viscosity and specific gravity of the waste liquid 14, etc. The length and thickness of the vibrating vane 16f at which the vibrating vane flutters most at a given frequency can be selected. If the vibration frequency of the vibration motor 16d and the thickness of the vibrating vane 16f are fixed and the length of the vibrating vane 16f is varied, the fluttering degree is shown in Fig. 14. That is, as the length m is increased, the fluttering degree F is increased up to some stage. However, when the length m exceeds this stage, the fluttering degree F is reduced, the vibrating vane is little fluttered when the length m is equal to some value. Further, when the length of the vibrating vane is further increased, the fluttering degree F is increased again. This phenomenon is repeated.

With respect to the length of the vibrating vane, the length L₁ showing the first peak or the length L₂ showing the second peak is preferably selected. Which one of the length L₁ and the length L₂ should be selected can be determined at pleasure in accordance with which one of the vibration and flow of the system should be intensified. When the length L₃ showing the third peak is selected, the amplitude is liable to be reduced. L₁ and L₂ were measured for vibrating vane of stainless steel (SUS304) by using a 75kW vibration motor having a vibration frequency 40 to 60Hz (manufactured by Murakami Seiki MFG. Co., Ltd.) while varying the thickness of the vibrating vane, and the measurement results are shown in the following Table 3.

**[Table 3]**

| THICKNESS | L₁ | L₂ |
|---|---|---|
| 0.10 mm | about 15 mm | - |
| 0.20 mm | about 25 mm | about 70 mm |
| 0.30 mm | about 45 mm | 110 - 120 mm |
| 0.40 mm | about 50 mm | 110 - 120 mm |
| 0.50 mm | about 55mm | |

In this experiment, the length from the center of the vibration transmitting rod 16e to the tip edge of the fixing member 16j was set to 27mm, and the inclination angle a of the vibrating vane 16f was set to face-up 15° (+15°).

Returning to Fig. 3 again, according to this embodiment, the vibration generated by one vibration motor 16d is transmitted to the vibrating vanes 16f disposed in the electrolytic tanks 10A, 10B, that is, one vibration motor 16d is commonly used for the vibrating flow generating means of the electrolytic tanks 10A, 10B.

Next, as shown in Figs. 1 and 2, plural anode bus bars 20 and plural cathode bus bars 21 are disposed on the electrolytic tanks 10A, 10B. These bus bars are connected to the positive and negative terminals of a power supply circuit 34 serving as an electrolysis power source, respectively. Plural plate-shaped anodes 22 are suspended on each anode bus bar 20, and the lower portions of the anodes 22 are immersed in the waste liquid 14. Likewise, plural plate-shaped cathodes 23 are suspended on each cathode bus bar 21, and the lower portions of the cathodes 23 are immersed in the waste liquid 14. The anodes 22 and the cathodes 23 are alternately arranged at predetermined intervals. The distance between the electrodes (anode and cathode) is preferably set to 5 to 50 mm, more preferably 10 to 40 mm, and particularly more preferably 20 to 30 mm.

In the present invention, the vibrating flow stirring of the waste liquid 14 is carried out by the vibrating flow generating means, thereby suppressing explosion caused by the reaction of hydrogen and oxygen generated at the electrodes, so that the distance between the electrodes can be reduced to such a small value.

The ratio (electrode ratio) in area between the immersed portion of the cathode 23 in the waste liquid 14 and the immersed portion of the anode 22 in the waste liquid 14 is set so that the cathode is equal to 0.5 or more with respect to the anode of 1, more preferably the cathode is equal to 0.6 to 0.9 with respect to the anode of 1. In the present invention, it is preferable that a part of each anode 22 (particularly, the portion immersed in the waste liquid 14) is designed in a mesh or porous structure to enhance the fluidity of the waste liquid 14. Further, the area of the mesh or porous portion is preferably set to 10 to 80% with respect to the area of the portion immersed in the waste liquid 14, and more preferably 50 to 80%.

In the present invention, the voltage applied between the anode 22 and the cathode 23 by the power supply circuit 34 is preferably set to 4 to 15V, more preferably to 5 to 6 V. Further, the current flowing between the anode 22 and the cathode 23 is set to 0.8 to 5A per liter of the waste liquid 14, and more preferably to 1.5 to 2A, for example, and the optimum value is varied in accordance with the kind of the waste liquid 14.

In the above-described embodiment, the waste liquid 14 to be treated is continuously supplied to the electrolytic tank 10A through the waste liquid supply pipe 12A. The waste liquid 14 to be treated overflowing from the electrolytic tank 10A flows from the flow-in cut-out portion 13a into the chute 13, and then flows from the flow-out cut-out portion 13b into the electrolytic tank 10B. The waste liquid 14 to be treated which overflows from the electrolytic tank 10B is taken out as treated waste liquid through the waste liquid take-out pipe 12B.

As described above, the vibration motor 16d of the vibrating flow generator 16 is made to vibrate while the waste liquid 14 is continuously supplied into the series 10 of the tanks, whereby the vibrating vanes 16f fixed to the vibration transmitting rods 16e operationally connected to the vibration motor 16d so as to vibrate in the waste liquid 14 is vibrated in each of the electrolytic tanks 10A, 10B, thereby producing the vibrating flow in the waste liquid 14. Further, a predetermined voltage is applied between the anode 22 and the cathode 23 through the anode bus bar 20 and the cathode bus bar 21 by the power supply circuit 34 to electrolyze the waste liquid 14 in the electrolytic tanks 10A, 10B.

As the waste liquid to be treated by the continuous treatment method and apparatus of the present invention may be cited metal-contained waste liquid such as waste liquid containing transition metal and/or alloy thereof, for example, waste liquid containing at least one of elements having atomic numbers of 21 (Sc) to 30 (Zn), 39 (Y) to 48 (Cd) and 57 (La) to 80 (Hg). As typical waste liquid may be cited waste liquid containing Ti, V, Cr, Mn, Fe, Co and/or Ni. Further, cyanogen-contained waste liquid may be cited as the waste liquid to be treated. Cyanogen-contained waste liquid can be decomposed into carbon dioxide, nitrogen and water by electrolytic oxidation.

In the present invention, even when the distance between the anode 22 and the cathode 23 is reduced and the current density is increased, occurrence of short-circuiting is suppressed and further occurrence of explosion caused by the reaction of hydrogen and oxygen generated from the electrodes is suppressed by the action of the vibrating flow generated in the waste liquid 14. Therefore, the continuous electrolyzing treatment can be efficiently and quickly performed on the waste liquid 14 with sufficiently high current density. In order to achieve such an action excellently, it is preferable to produce the vibrating flow so that the three-dimensional flow velocity of the waste liquid 14 is equal to 150 mm/second or more. The three-dimensional flow velocity of the waste liquid 14 is preferably equal to 200 mm/second or more, and more preferably to 250 mm/second or more. The three-dimensional flow velocity can be measured by using a three-dimensional electromagnetic flow velocity detector (trade name: ACM300 manufactured by Alec Electronics Co., Ltd.). Such a high three-dimensional flow velocity can be effectively achieved by inducing the vibrating flow in the waste liquid 14. It is difficult to implement such vibrating flow by normal stirring, and a large-scale apparatus architecture is required in order to implement the vibrating flow.

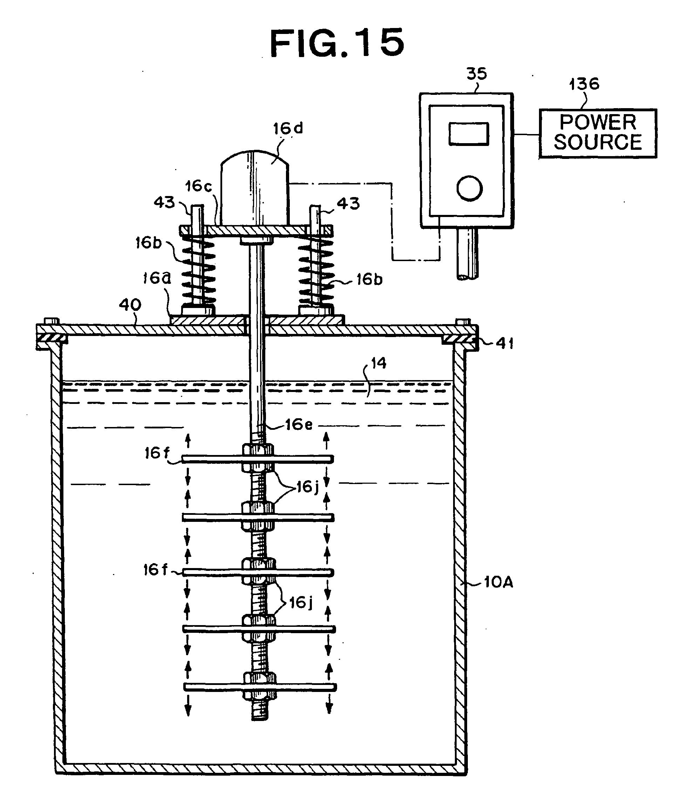

Fig. 15 is a cross-sectional view showing a modification of the vibrating flow generator. In this modification, the base table 16a is fixed onto a fixing table 40 fixed to the upper portion of the electrolytic tank 10A through a vibration absorbing member 41. Further, rod-like guide members 43 extending upwardly in the vertical direction are fixed to the fixing table 40, and the guide members 43 are located in the coil springs 16b. A transistor inverter 35 for controlling the vibration frequency of the vibration motor 16d is interposed between the vibration motor 16d and a power source 136 for driving the vibration motor. The voltage supplied from the power source 136 is equal to 200V, for example. Such driving means of the vibration motor 16d can be used in the other embodiments of the present invention.

Fig. 16 is a cross-sectional view showing a modification of the vibrating flow generator. In this modification, rod-like upper guide members 144 extending downwardly in the vertical direction are fixed to the vibrating member 16c, rod-like lower guide members 145 extending upwardly in the vertical direction are fixed to the fixing table 40, and these guide members 144, 145 are located in the coil springs 16b. Further, a proper gap for allowing vibration of the vibrating member 16c is formed between the lower end of the upper guide member 144 and the upper end of the lower guide member 145.

Fig. 17 is a cross-sectional view showing a modification of the vibrating flow generator. In this modification, the vibration motor 16d is fixed to the lower side of an additive vibrating member 16c' equipped to the upper side of the vibrating member 16. The vibration transmitting rod 16e is branched into two portions 134 in the electrolytic tank 10A, and the vibrating vanes 16f are fixedly bridged between the two rod portions 134.

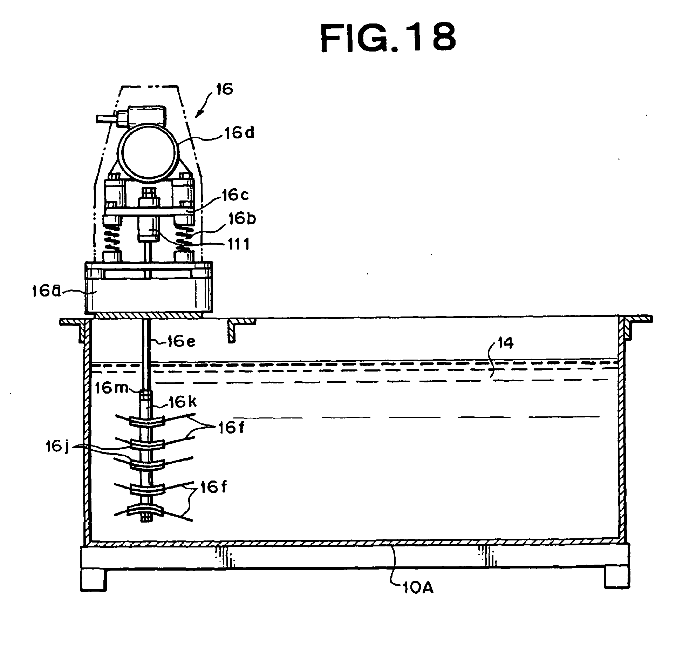

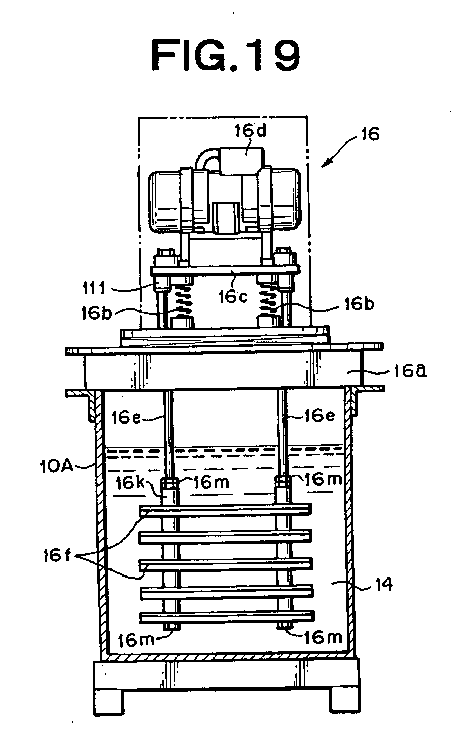

Figs. 18 and 19 are cross-sectional views showing a modification of the vibrating flow generator. In this modification, the lowermost vibrating vane 16f is inclined downwardly, and the other vibrating vanes 16f are inclined upwardly. This construction enables sufficient vibrating flow stirring of the waste liquid 14 at a portion near to the bottom portion of the electrolytic tank 10A, and occurrence of pooling at the bottom portion of the electrolytic tank can be prevented. Further, by inclining all the vibrating vanes 16f downwardly, hydrogen and oxygen generated through the electrolysis can be sufficiently scattered into the waste liquid to thereby increase the frequency of the reaction opportunity with metals and cyanogen.

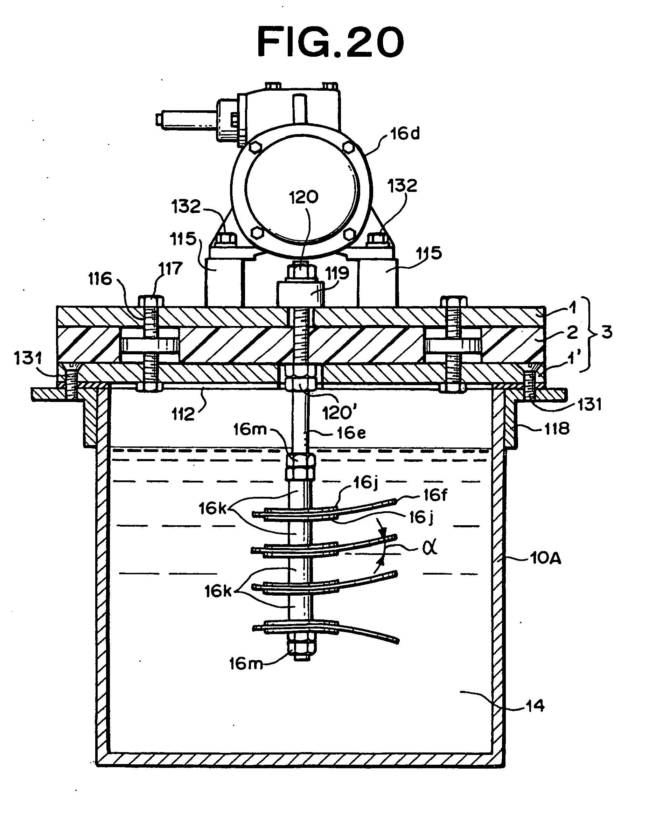

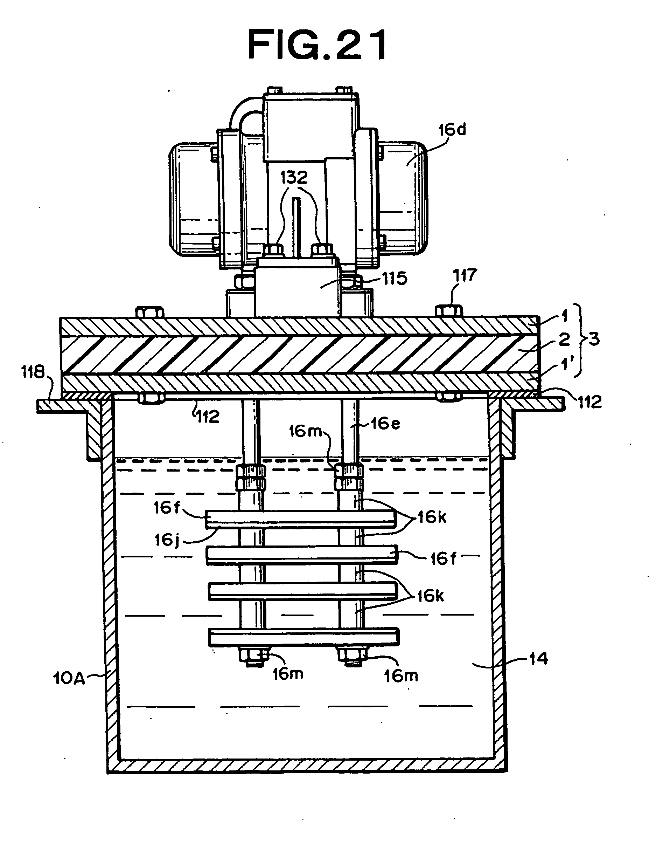

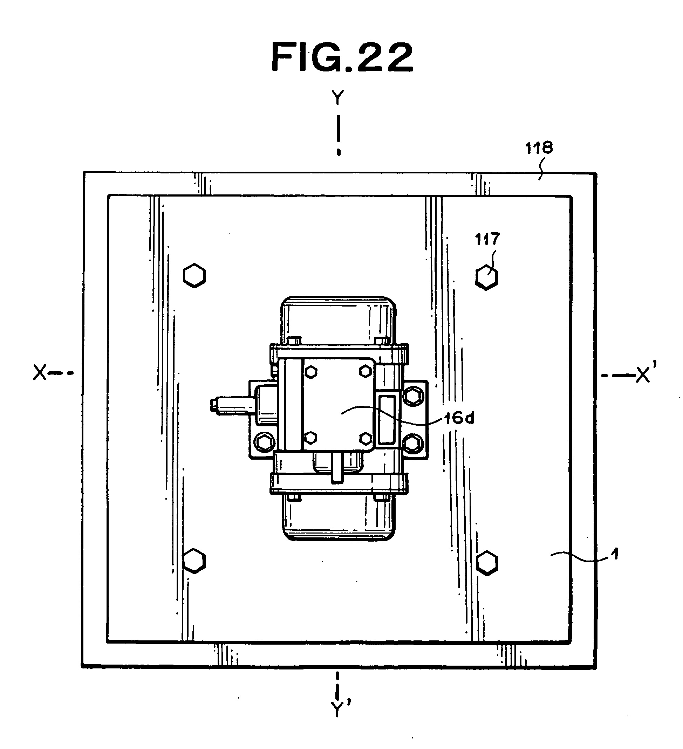

Figs. 20 and 21 are cross-sectional views showing another fixing manner of the vibrating flow generator to the electrolytic tank in the continuous electrolyzing apparatus in which the method for continuously electrolyzing waste liquid of the present invention is carried out, and Fig. 22 is a plan view of the continuous electrolyzing apparatus. Figs. 20 and 21 correspond to the X-X' cross-sectional view and the Y-Y' cross-sectional view of Fig. 22, respectively. In these figures, the cathode, the anode, the power supply circuit, etc. for the electrolysis are omitted from illustration.

In this embodiment, in place of the coil springs 16b, a laminate member 3 comprising a rubber plate 2 and metal plates 1, 1' is used as the vibration absorbing member. That is, the laminate member 3 is formed as follows. That is, the metal plate 1' is fixed through a rubber vibration insulator 112 by bolts 131 to a fixing member 118 fixed to the upper end edge portion of the electrolytic tank 10A, the rubber plate 2 is disposed on the metal plate 1', the metal plate 1 is disposed on the rubber plate 2 and these parts are unified into one body by bolts 116 and nuts 117.

The vibration motor 16d is fixed to the metal plate 1 through a support member 115 by bolts 132. The upper end portion of the vibration transmitting rod 16e is fixed through a rubber ring 119 to the laminate member 3, particularly to the metal plate 1 and the rubber plate 2. That is, the upper metal plate 1 also exhibits the function of the vibrating member 16c of the embodiments described with reference to Fig. 1 and the other figures, and the lower metal plate 1' exhibits the function of the base table 16a of the embodiments described with reference to Fig. 1 and the other figures. The laminate member 3 (mainly the rubber plate 2) containing the metal plates 1, 1' exhibits the same vibration absorbing function as the coil springs 16b described with reference to Fig. 1 and the other figures.

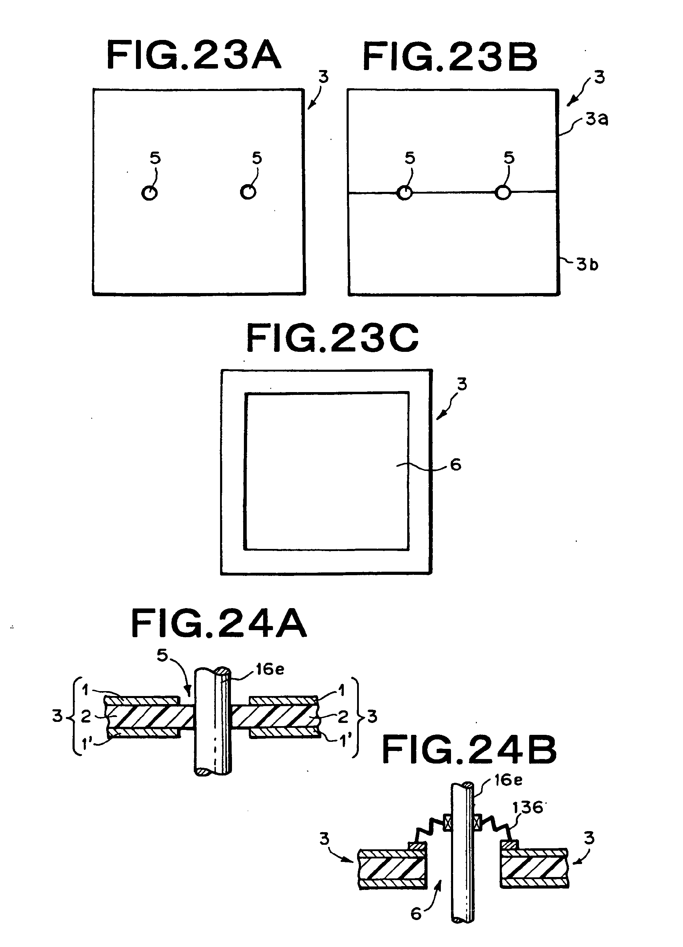

Figs. 23A to 23C are plan views showing the laminate member 3.

In an embodiment of Fig. 23A corresponding to the embodiment shown in Figs. 20 to 22, through holes 5 through which the vibration transmitting rods 16e penetrate are formed in the laminate member 3. In an embodiment of Fig. 23B, the laminate member 3 comprises two portions 3a and 3b into which the laminate member 3 is divided by a dividing line passing through the through holes 5. With this construction, the vibration transmitting rods 16e can be made to easily penetrate through the through holes when the apparatus is fabricated. In an embodiment of Fig. 23C, the laminate member 3 has an annular shape corresponding to the upper end edge portion of the electrolytic tank 10A, and an opening 6 is formed at the center of the laminate member 3.

In the embodiments of Figs. 23A and 23B, the upper portion of the electrolytic tank 10A is sealed by the laminate member 3, whereby gas volatilized from the waste liquid 14 or splashing electrolytic solution can be prevented from leaking to the surrounding.

Figs. 24A and 24B are cross-sectional views showing the sealing state of the electrolytic tank by the laminate member 3. In the embodiment of Fig. 24A, the rubber plate 2 abuts against the vibration transmitting rod 16e in the through hole 5 to perform sealing. In the embodiment of Fig. 24B, a flexible seal member 136 which is fixed to the laminate member 3 and the vibration transmitting rod 16e and closes the gap between these elements is equipped to the opening portion 6 of the laminate member 3.

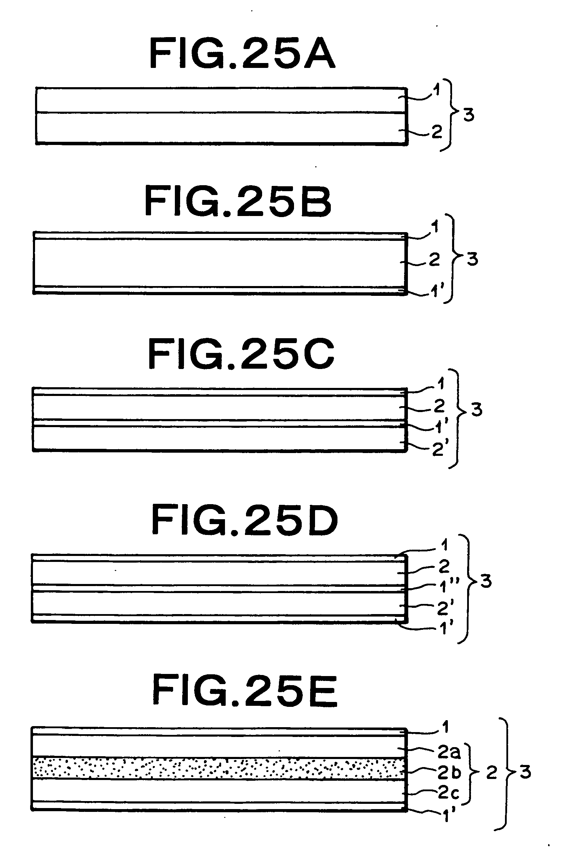

Figs. 25A to 25E each show an embodiment of the laminate member 3 as a vibration absorbing member.

The embodiment of Fig. 25B corresponds to the embodiment of Figs. 20 to 22. In the embodiment of Fig. 25A, the laminate member 3 comprises a metal plate 1 and a rubber plate 2. In the embodiment of Fig. 25C, the laminate member 3 comprises an upper metal plate 1, an upper rubber plate 2, a lower metal plate 1' and a lower rubber plate 2'. In the embodiment of Fig. 25D, the laminate member 3 comprises an upper metal plate 1, an upper rubber plate 2, an intermediate metal plate 1", a lower rubber plate 2' and a lower metal plate 1'. The number of metal plates and the number of rubber plates in the laminate member 3 may be set to 1 to 5, for example. In the present invention, the vibration absorbing member may be constructed by only rubber plate.

Stainless steel, iron, copper, aluminum or other proper alloy may be used as the material of the metal plates 1, 1', 1". The thickness of the metal plate may be set to 10 to 40 mm, for example. However, the metal plate (for example, the intermediate metal plate 1") which is not directly fixed to the members other than the laminate member 3 may be set to a small value (for example, 0.3 to 10 mm).

Synthetic rubber or vulcanized natural rubber may be used as the material of the rubber plates 2, 2'. Rubber vibration insulator defined by JISK6386 is preferably used, and more preferably the rubber plates are formed of materials of 4 to 22 kgf/cm², preferably 5 to 10 kgf/cm² in static modulus of elasticity in shear and 250% or more in ultimate elongation. As the synthetic rubber may be used chloroprene rubber, nitrile rubber, nitrile-chloroprene rubber, styrene-chloroprene rubber, acrylonitrile-butadiene rubber, isoprene rubber, ethylene-propylene-diene copolymer rubber, epichlorohydrin rubber, alkylene oxide rubber, fluorine rubber, silicone rubber, urethane rubber, polysulfide rubber, phosphorus rubber (flame-retarded rubber) or the like. The thickness of the rubber plate is set to 5 to 60mm, for example.

In the embodiment of Fig. 25E, the laminate member 3 comprises an upper metal plate 1, a rubber plate 2 and a lower metal plate 1', and the rubber plate 2 comprises an upper solid rubber layer 2a, a sponge rubber layer 2b and a lower solid rubber layer 2c. One of the upper and lower solid rubber layers 2a, 2c may be removed. Further, plural solid rubber layers and plural sponge rubber layers may be laminated.

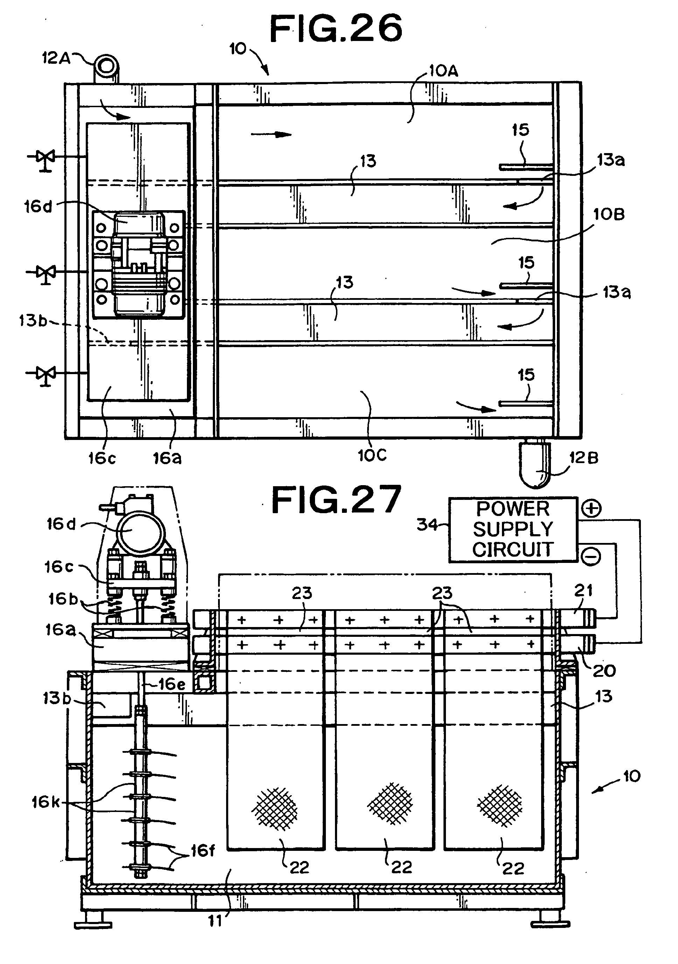

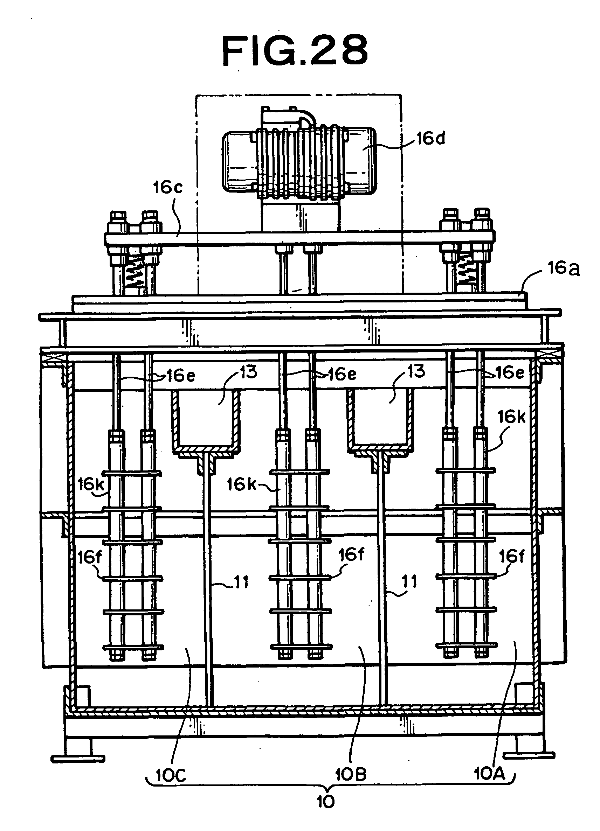

Figs. 26 to 28 show the construction of another embodiment of the continuously electrolyzing apparatus in which the method for continuously electrolyzing waste liquid according to the present invention is executed. Here, Fig. 26 is a partially-omitted plan view, and Figs. 27 and 28 are cross-sectional views.

In this embodiment, the series 10 of tanks contains three electrolytic tanks 10A, 10B, 10C connected to one another in series, and a partition wall 11 and a chute 13 are disposed between the electrolytic tanks 10A, 10B and between the electrolytic tanks 10B and 10C, respectively. The vibration motor 16d is commonly used for the vibrating flow generating means of the three electrolytic tanks 10A, 10B, 10C. In each of the electrolytic tanks 10A, 10B, 10C, the same electrolysis as the above embodiments is carried out, and the waste liquid 14 supplied to the electrolytic tank 10A through the waste liquid supply pipe 12A is taken out from the electrolytic tank 10C through the waste liquid take-out pipe 12B.

In this embodiment, the continuous electrolysis using the three electrolytic tanks 10A, 10B, 10C is carried out, and thus waste liquid of higher concentration can be sufficiently electrolyzed. Further, the number of electrolytic tanks can be increased as occasion demands.

Next, the present invention will be described with the following Examples, however, the present invention is not limited to these Examples.

### Example 1

The continuous electrolysis of chromium plating waste liquid was carried out by using the three-tank type apparatus for continuously electrolyzing waste liquid shown in Figs. 26 to 28. The construction of the apparatus and the operating condition were as follows.

Vibration motor : 3-phase, 200V, 250W (URAS VIBRATOR 2-pole KZE type manufactured by Murakami Seiki MFG. Co., Ltd.)

Inverter: Fuji inverter FVR-CIIS manufactured by Fuji Electric Co., Ltd.

Power source for vibration motor : (Hi-mini MB-7 silicon rectifier) 6.0kW manufactured by Chuo Seisakusho Co., Ltd.

Capacity of electrolytic tank (total of three tanks): 520 liters

Vibrationally stirring condition: vibration frequency of vibration motor was regulated to 45Hz by the inverter; amplitude of 0.15mm, frequency of 200 cycles per minute of the vibrating vanes

Anode: iron plate

Cathode: platinum plate

Anode/cathode distance :30mm

Electrode ratio: cathode/anode =1/1.5≒0.67 ..

Voltage for electrolysis: 4V

Current for electrolysis: 450A (=0.865A/waste liquid of 1 liter)

The waste liquid to be treated was chromium plating waste liquid (containing trivalent chromium of about 1000ppm) whose pH was adjusted to 2.5 by sulfuric acid, and it was supplied into a series of the three electrolytic tanks at a rate of 1000 liters/hour to carry out the continuous electrolysis.

The concentration of trivalent chromium in the treated waste liquid picked up from the waste liquid take-out port was equal to 0 ppm. It is estimated that by carrying out the vibrating flow stirring, sufficiently activated hydrogen gas generated from the electrode attacks hexavalent chromium existing in the waste liquid to reduce hexavalent chromium to trivalent chromium in extremely short time, and the trivalent chromium thus reduced is reacted with sulfuric acid in the waste liquid to form chromium sulfate CrSo₄.

### Example 2

The continuous electrolysis of waste liquid containing cyanogen was carried out by using the two-tank type apparatus for continuously electrolyzing waste liquid shown in Figs. 1 to 5. The construction of the apparatus and the operating condition were the same as Example 1 with the exception of the following points.

Capacity of electrolytic tank (total of two tanks): 330 liters

Anode: titanium plate whose surface was deactivated by PbO₂ (carbon or graphite may be used)

Cathode: stainless steel plate (SUS340) (Pt or In may be used)

Anode/cathode distance :25mm

Electrode ratio: cathode/anode = 0.8/1 =0.8

Current for electrolysis : 450A (=1.364A/waste liquid of 1 liter)

The waste liquid to be treated was cyanogen-contained waste liquid of 2000ppm in cyanogen concentration whose pH was adjusted to 10 by caustic soda, and it was supplied into a series of the two electrolytic tanks at a rate of 500 liters/hour to carry out the continuous electrolysis.

The concentration of cyanogen in the treated waste liquid picked up from the waste liquid take-out port was equal to 1 ppm. Cyanogen was decomposed into carbon dioxide and N₂ in the treatment.

### Example 3

Waste liquid generated from the plating treatment of a plastic substrate was continuously electrolyzed by using the two-tank type apparatus for continuously electrolyzing waste liquid shown in Figs. 1 to 5. The construction of the apparatus and the operating condition were the same as Example 2 with the exception of the following points.

Anode: stainless steel plate (SUS340) (platinum may be used)

Cathode: copper plate (copper-plated plate may be used)

Anode/cathode distance : 30 mm

Electrode ratio: cathode/anode = 0.5/1 = 0.5

Voltage for electrolysis : 12V

Current for electrolysis: 300A (= 0.909A/waste liquid of 1 liter)

Waste liquid to be treated was obtained as follows.

Plating treatment was carried out on a plastic substrate by using copper sulfate plating bath comprising the following materials:
- copper sulfate (CuSO₄•5H₂O): 60g/liter
- sulfuric acid (H₂SO₄): 200g/liter
- chlorine ion (Cl⁻): 60mg/liter
and then the result generated from the above plating treatment was adjusted by sulfuric acid to set to the pH value to 2 and the concentration of copper sulfate to 150mg/liter, and the result was added with NaCl (KCl may be used) as electrolysis auxiliary agent at a ratio of 200g/liter. The result thus achieved was supplied as waste liquid into a series of the two electrolytic tanks at a rate of 500 liter/hour to perform the continuous electrolysis.

The concentration of copper in the treated waste liquid taken out from the waste liquid take-out port was equal to 1ppm.

### Example 4

The continuous electrolysis was carried out on Zn plating bath by using the two-tank type apparatus for continuously electrolyzing waste liquid shown in Figs. 1 to 5. The construction of the apparatus and the operating condition were the same as Example 3 with the exception of the following points.

Cathode : Zn thin plate (Zn steel plate may be used)

The waste liquid to be treated was Zn plating bath (zincate bath) containing Zn of 500ppm, and it was supplied into a series of the two electrolytic tanks at a rate of 500 liter/hour to perform the continuous electrolysis treatment.

The Zn concentration in the treated waste liquid collected from the waste liquid take-out port was equal to 3ppm.

The same effect was achieved when the continuous electrolysis was carried out on waste liquid containing transition metals such as Ni, Ag, Au, Sn, Fe, etc. and/or alloys thereof in the same manner as the above Examples.

Particularly, the present invention is effective on the treatment of waste liquid containing ferrous chloride generated as a result of photomicrofabrication, and ferrous chloride in waste liquid can be continuously electrolytically reduced and withdrawn as ferric chloride. Therefore, the ferric chloride thus withdrawn can be applied to photomicrofabrication again.

### INDUSTRIAL APPLICABILITY

(1) The present invention can be applied irrespective of the concentration of metals in waste liquid, no sludge occurs and the metals can be withdrawn and recycled.
(2) The present invention can greatly reduce the running cost to 1/20 to 1/100 with respect to the conventional treatment using chemicals because no chemical is used and efficiency of the treatment is high.
(3) In the present invention, the treatment time from the supply to the take-out of the waste liquid into/out of a series of the tanks is equal to about 20 to 40 minutes, and this time is short. In addition, although it has been hitherto estimated that it is impossible to perform the waste liquid electrolysis by using any treatment method other than the batch treatment, however, it is the first time that the present invention succeeds to continuously perform the waste liquid electrolysis.
(4) In the present invention, when cyanogen-contained waste liquid is treated, cyanogen is decomposed into carbon dioxide gas and N₂, and no ammonia occurs.
(5) The apparatus is very simple in construction, and no specific electrode plate is needed.
(6) In the case of a treatment using chemicals, a secondary trouble such as failure of aggregation or the like occurs. However, no such trouble occurs in the present invention.
(7) In the case of chromium-contained waste liquid, the conventional treatment method using chemicals produces foul odors because it uses sodium bisulfite, however, no foul odor occurs in the present invention.

## Claims

1. An apparatus (10) for continuously electrolyzing waste liquid, comprising:
a series of tanks comprising a plurality number n (n represents an integer equal to or greater than 2) of electrolytic tanks (10A, 10B) each having an anode (22) and a cathode (23), the electrolytic tanks being connected in series;
vibrating flow generating means (16) which is equipped to each of said electrolytic tanks and generates vibrating flow in waste liquid (14) to be treated; and
a power supply circuit (34) for applying a voltage between said anode and said cathode,
wherein the distance between said anode and said cathode is set to 10 to 40 mm, and said vibrating flow generating means comprises vibration generating means (16d); vibration transmitting rods (16e) which are operationally connected to said vibration generating means so as to vibrate in the waste liquid to be treated; and vibrating vanes (16f) fixed to said vibration transmitting rods;
wherein plural electrolytic tanks constituting said series of tanks are unified,
and said electrolytic tanks thus unified are partitioned by respective partition walls (11);
wherein a chute (13) is equipped between the respective continuous electrolytic tanks thus unified so that the waste liquid to be treated is fed from one electrolytic tank to the other electrolytic tank;
wherein said chute is equipped with a flow-in cut-out portion (13a) into which the waste liquid to be treated flows from the one electrolytic tank of said continuous electrolytic tanks of the unified electrolytic tanks, and a flow-out cut-out portion (13b) from which the waste liquid to be treated flows out to the other electrolytic tank of said continuous electrolytic tanks of the unified electrolytic tanks;
wherein the one electrolytic tank of said continuous electrolytic tanks of the unified electrolytic tanks is equipped with a dam (15) adjacently to said flow-in cut-out portion; and
wherein said vibration generating means is used commonly by plural vibrating flow generating means.

2. Apparatus according to claim 1, wherein vibrating stress dispersing means (16g1, 16g2) are interposed between said vibration generating means and said vibration transmitting rods and/or between said vibration transmitting rods and said vibration vanes.

3. Apparatus according to claim 1, wherein said vibration generating means is attached to at least one of said electrolytic tanks with a vibration absorbing member (41) interposed therebetween, and said vibration absorbing member is formed of a laminate member (3) comprising at least one rubber plate (2) and at least one metal plate (1).

4. Apparatus according to claim 3, wherein said vibration absorbing member is disposed so as to seal an upper portion of at least one of said electrolytic tanks.

5. Apparatus according to claim 4, wherein said vibration transmitting rod penetrates through a through hole (5) formed in said vibration absorbing member, and an outer face of said vibration absorbing member is in contact with an inner face of a through hole formed in said rubber plate constituting said vibration absorbing member.

6. Apparatus according to claim 3, wherein said vibration transmitting rod is attached to said vibration absorbing member.

7. Apparatus according to claim 6, wherein said vibration absorbing member comprises an upper metal plate (1) which is disposed uppermost among said metal plate and rubber plate constituting said laminate member and an upper rubber plate (2) disposed just below said upper metal plate, and said vibration transmitting rod is attached to said upper metal plate and upper rubber plate with a rubber ring (119) disposed on said upper metal plate.

8. Apparatus according to claim 3, wherein, wherein at least one of said rubber plate comprises a sponge rubber layer (2b) and a solid rubber layer (2a, 2c).

9. A method for continuously electrolyzing waste liquid with the use of an apparatus of any of claims 1 to 8, comprising the steps of:
continuously supplying waste liquid to be treated into a first electrolytic tank of the series of tanks;
continuously taking out treated waste liquid from the n-th electrolytic tank of the series of tanks;
wherein in each of said tanks the waste liquid to be treated is electrolyzed under the condition that the vibrating vanes (16f) are vibrated in the waste liquid (14) at an amplitude of 0.1 to 10.0 mm and at an oscillation frequency of 100 to 1000 cycles per minute to induce vibrating flow in the waste liquid at a three-dimensional flow velocity of 150 mm/s or more, and a voltage of 4 to 15 V is applied between the anode (22) and the cathode (23).

10. Method according to claim 9, wherein said waste liquid is chromium plating waste liquid.

## Patentansprüche

1. Vorrichtung (10) zum kontinuierlichen Elektrolysieren von Abfallflüssigkeit, umfassend:
eine Reihe von Tanks, die eine Mehrzahl n (n repräsentiert eine ganze Zahl gleich oder größer als 2) von elektrolytischen Tanks (10A, 10B) umfasst, die jeweils eine Anode (22) und eine Kathode (23) aufweisen, wobei die elektrolytischen Tanks in Reihe verbunden sind;
ein eine Vibrationsströmung erzeugendes Mittel (16), das an jedem der elektrolytischen Tanks vorgesehen ist und eine Vibrationsströmung in der zu behandelnden Abfallflüssigkeit (14) erzeugt;
eine Leistungsversorgungsschaltung (34) zum Anlegen einer Spannung zwischen der Anode und der Kathode,
wobei die Distanz zwischen der Anode und der Kathode auf 10 bis 40 mm festgelegt ist und das eine Vibrationsströmung erzeugende Mittel ein Vibrationserzeugungsmittel (16d); Vibrationsübertragungsstangen (16e), die funktional mit dem Vibrationserzeugungsmittel verbunden sind, um die zu behandelnde Abfallflüssigkeit zu vibrieren; und Vibrationsflügel (16f) umfasst, die an Vibrationsübertragungsstangen fixiert sind;
wobei die Mehrzahl von elektrolytischen Tanks, die die Reihe von Tanks bilden, vereinigt sind, und die elektrolytischen Tanks, die somit vereinigt sind, durch jeweilige Trennwände (11) unterteilt sind;
wobei eine Rinne (13) zwischen den jeweiligen kontinuierlichen elektrolytischen Tanks, die somit vereinigt sind, vorgesehen ist, so dass die zu behandelnde Abfallflüssigkeit von einem elektrolytischen Tank zu dem anderen elektrolytischen Tank zugeführt wird;
wobei die Rinne mit einem ausgeschnittenen Einströmabschnitt (13a), in welchem die zu behandelnde Abfallflüssigkeit von einem elektrolytischen Tank der kontinuierlichen elektrolytischen Tanks der vereinigten elektrolytischen Tanks strömt, und einem ausgeschnittenen Ausströmabschnitt (13b) ausgestattet ist, von dem die zu behandelnde Abfallflüssigkeit aus dem anderen elektrolytischen Tank der kontinuierlichen elektrolytischen Tanks der vereinigten elektrolytischen Tanks strömt;
wobei der eine elektrolytische Tank der kontinuierlichen elektrolytischen Tanks der vereinigten elektrolytischen Tanks mit einem Damm (15) benachbart dem ausgeschnittenen Einströmabschnitt versehen ist; und
wobei das Vibrationserzeugungsmittel gemeinsam durch mehrere eine Vibrationsströmung erzeugende Mittel verwendet ist.

2. Vorrichtung nach Anspruch 1, wobei Vibrationsspannung verteilende Mittel (16g1, 16g2) zwischen dem Vibrationserzeugungsmittel und den Vibrationsübertragungsstangen und/oder zwischen Vibrationsübertragungsstangen und den Vibrationsflügeln angeordnet sind.

3. Vorrichtung nach Anspruch 1, wobei das Vibrationserzeugungsmittel an zumindest einem der elektrolytischen Tanks befestigt ist, wobei ein Vibrationsabsorptionselement (41) dazwischen angeordnet ist, und das Vibrationsabsorptionselement aus einem Laminatelement (3) gebildet ist, das zumindest eine Gummiplatte (2) und zumindest eine Metallplatte (1) umfasst.

4. Vorrichtung nach Anspruch 3, wobei das Vibrationsabsorptionselement so angeordnet ist, dass es einen oberen Abschnitt von zumindest einem der elektrolytischen Tanks abdichtet.

5. Vorrichtung nach Anspruch 4, wobei die Vibrationsübertragungsstange durch ein Durchgangsloch (5) eindringt, das in dem Vibrationsabsorptionselement gebildet ist, und eine Außenseite des Vibrationsabsorptionselements mit einer Innenseite eines Durchgangslochs in Kontakt steht, das in der Gummiplatte geformt ist, die das Vibrationsabsorptionselement bildet.

6. Vorrichtung nach Anspruch 3, wobei die Vibrationsübertragungsstange an dem Vibrationsabsorptionselement befestigt ist.

7. Vorrichtung nach Anspruch 6, wobei das Vibrationsabsorptionselement eine obere Metallplatte (1) umfasst, die an oberster Stelle über die Metallplatte und Gummiplatte, die das Laminatelement bilden, angeordnet ist, und eine obere Gummiplatte (2) gerade unterhalb der oberen Metallplatte angeordnet ist, und wobei die Vibrationsübertragungsstange an der oberen Metallplatte und der oberen Gummiplatte mit einem Gummiring (119) befestigt ist, der an der oberen Metallplatte angeordnet ist.

8. Vorrichtung nach Anspruch 3, wobei zumindest eine der Gummiplatten eine Schwammgummischicht (2b) und eine Feststoffgummischicht (2a, 2c) umfasst.

9. Verfahren zum kontinuierlichen Elektrolysieren von Abfallflüssigkeit durch Verwendung einer Vorrichtung nach einem der Ansprüche 1 bis 8, mit den Schritten:
kontinuierliches Liefern von zu behandelnder Abfallflüssigkeit in einen ersten elektrolytischen Tank der Reihe von Tanks;
kontinuierliches Entnehmen behandelter Abfallflüssigkeit von dem n-ten elektrolytischen Tank der Reihe von Tanks;
wobei in jedem der Tanks die zu behandelnder Abfallflüssigkeit unter der Bedingung elektrolysiert wird, dass die Vibrationsflügel (16f) in der Abfallflüssigkeit (14) mit einer Amplitude von 0,1 bis 10,0 mm und mit einer Oszillationsfrequenz von 100 bis 1000 Zyklen pro Minute vibriert werden, um eine Vibrationsströmung in der Abfallflüssigkeit mit einer dreidimensionalen Strömungsgeschwindigkeit von 150 mm/s oder mehr zu bewirken, und eine Spannung von 4 bis 15 V zwischen die Anode (22) und die Kathode (23) angelegt wird.

10. Verfahren nach Anspruch 9, wobei die Abfallflüssigkeit eine Abfallflüssigkeit für Chromgalvanisierung ist.

## Revendications

1. Appareil (10) d'électrolyse en continu de déchet liquide, comprenant :
une série de cuves comprenant un nombre pluriel n (n représente un nombre entier supérieur ou égal à 2) de cuves électrolytiques (10A, 10B) ayant chacune une anode (22) et une cathode (23), les cuves électrolytiques étant raccordées en série ;
un moyen de génération d'écoulement vibratoire (16) qui est installé sur chacune desdites cuves électrolytiques et génère un écoulement vibratoire dans le déchet liquide (14) à traiter ; et
un circuit d'alimentation électrique (34) pour appliquer une tension entre ladite anode et ladite cathode,
dans lequel la distance entre ladite anode et ladite cathode est réglée à 10 à 40 mm, et ledit moyen de génération d'écoulement vibratoire comprend un moyen de génération de vibrations (16d) ; des tiges de transmission de vibrations (16e) qui sont raccordées fonctionnellement audit moyen de génération de vibrations de façon à vibrer dans le déchet liquide à traiter ; et des aubes vibratoires (16f) fixées auxdites tiges de transmission de vibrations ;
dans lequel plusieurs cuves électrolytiques constituant ladite série de cuves sont unifiées, et lesdites cuves électrolytiques ainsi unifiées sont séparées par des cloisons de séparation (11) respectives ;
dans lequel une goulotte (13) est installée entre les cuves électrolytiques continues respectives ainsi unifiées de sorte que le déchet liquide à traiter soit fourni d'une cuve électrolytique à l'autre cuve électrolytique ;
dans lequel ladite goulotte est équipée d'une portion découpée d'entrée d'écoulement (13a) dans laquelle le déchet liquide à traiter s'écoule de ladite cuve électrolytique desdites cuves électrolytiques continues des cuves électrolytiques unifiées, et une portion découpée de sortie d'écoulement (13b) à partir de laquelle le déchet liquide à traiter s'écoule hors de l'autre cuve électrolytique desdites cuves électrolytiques continues des cuves électrolytiques unifiées ;
dans lequel ladite cuve électrolytique desdites cuves électrolytiques continues des cuves électrolytiques unifiées est équipée d'une retenue (15) adjacente à ladite portion découpée d'entrée d'écoulement ; et
dans lequel ledit moyen de génération de vibrations est utilisé en commun par plusieurs moyens de génération d'écoulement vibratoire.

2. Appareil selon la revendication 1, dans lequel des moyens de dispersion de contrainte vibratoire (16g1, 16g2) sont intercalés entre ledit moyen de génération de vibrations et lesdites tiges de transmission de vibrations et/ou entre lesdites tiges de transmission de vibrations et lesdites aubes vibratoires.

3. Appareil selon la revendication 1, dans lequel ledit moyen de génération de vibrations est attaché à au moins l'une desdites cuves électrolytiques avec un organe d'absorption de vibrations (41) interposé entre eux, et ledit organe d'absorption de vibrations est formé d'un organe stratifié (3) comprenant au moins une plaque en caoutchouc (2) et au moins une plaque en métal (1).

4. Appareil selon la revendication 3, dans lequel ledit organe d'absorption de vibrations est disposé de façon à sceller une portion supérieure d'au moins l'une desdites cuves électrolytiques.

5. Appareil selon la revendication 4, dans lequel ladite tige de transmission de vibrations pénètre à travers un trou traversant (5) formé dans ledit organe d'absorption de vibrations, et une face extérieure dudit organe d'absorption de vibrations est en contact avec une face intérieure d'un trou traversant formé dans ladite plaque en caoutchouc constituant ledit organe d'absorption de vibrations.

6. Appareil selon la revendication 3, dans lequel ladite tige de transmission de vibrations est attachée audit organe d'absorption de vibrations.

7. Appareil selon la revendication 6, dans lequel ledit organe d'absorption de vibrations comprend une plaque supérieure en métal (1) qui est disposée le plus haut parmi ladite plaque en métal et ladite plaque en caoutchouc constituant ledit organe stratifié et une plaque supérieure en caoutchouc (2) disposée juste en dessous de ladite plaque supérieure en métal, et ladite tige de transmission de vibrations est attachée à ladite plaque supérieure en métal et à ladite plaque supérieure en caoutchouc par une bague en caoutchouc (119) disposée sur ladite plaque supérieure en métal.

8. Appareil selon la revendication 3, dans lequel, au moins l'une de ladite plaque en caoutchouc comprend une couche de caoutchouc spongieux (2b) et une couche de caoutchouc solide (2a, 2c).

9. Procédé d'électrolyse en continu de déchet liquide grâce à l'utilisation d'un appareil de l'une quelconque des revendications 1 à 8, comprenant les étapes de :
alimentation en continu de déchet liquide à traiter dans une première cuve électrolytique de la série de cuves ;
retrait en continu de déchet liquide traité depuis la nième cuve électrolytique de la série de cuves ;
dans lequel, dans chacune desdites cuves, le déchet liquide à traiter est électrolysé à la condition que les aubes vibratoires (16f) soient mises en vibration dans le déchet liquide (14) à une amplitude de 0,1 à 10,0 mm et à une fréquence d'oscillation de 100 à 1 000 cycles par minute pour induire un écoulement vibratoire dans le déchet liquide à une vitesse d'écoulement tridimensionnelle de 150 mm/s ou plus, et une tension de 4 à 15 V est appliquée entre l'anode (22) et la cathode (23).

10. Procédé selon la revendication 9, dans lequel ledit déchet liquide est un déchet liquide de plaquage au chrome.
